# EUROPEAN PATENT APPLICATION

(11) **EP 2 226 975 A1**
(43) Date of publication of application: **08.09.2010**
(21) Application number: 08871603.0
(22) Date of filing: 18.12.2008
(51) Int. Cl.: H04L 12/56

(54) **A MESSAGE TRANSMITTING METHOD, NETWORK SYSTEM AND NODE EQUIPMENT BASED ON RING**

(30) Priority: 27.12.2007 CN 200710300291; 30.01.2008 CN 200810000292
(71) Applicant: Huawei Technologies Co., Ltd., Longgang District, Shenzhen Guangdong 518129 (CN)
(72) Inventor: ZHENG, Ruobin, Guangdong 518129 (CN)
(74) Representative: Barth, Stephan Manuel
(86) International application number: PCT/CN2008/073574
(87) International publication number: WO 2009/092241

(57) **Abstract**

A ring-based packet transmitting method, network system and node equipment are provided. The ring-based packet transmitting method includes the following steps: a received user packet is encapsulated; one or more PBB or PBT rings are detected for fault; when a fault is detected, a PBB or PBT ring having no fault is selected to send the encapsulated packet to a target node equipment according to a corresponding relation between virtual media access control (VMAC) addresses and ports. The network system includes at least two node equipments interconnected with one or more node equipments respectively through ports provided thereon to form one or more PBB or PBT rings. The node equipment includes at least two ports and a data processing unit. Thus, packet transmission on the PBB or PBT ring is achieved.

## Description

The application claims priority to Chinese Patent Application No. 200710300291.6, filed on December 27, 2007 and entitled "RING-BASED PACKET TRANSMITTING METHOD, NETWORK SYSTEM AND NODE EQUIPMENT", and Chinese Patent Application No. 200810000292.3, filed on January 30, 2008 and entitled "RING-BASED PACKET TRANSMITTING METHOD, NETWORK SYSTEM AND NODE EQUIPMENT", which are incorporated herein by reference in their entireties.

### FIELD OF THE TECHNOLOGY

The present invention relates to the field of communications technologies, and more particularly to a ring-based packet transmitting method, network system and node equipment.

### BACKGROUND OF THE INVENTION

The provider backbone bridge (PBB) network is defined in the Institute of Electrical and Electronics Engineers (IEEE) 802.1ah standard, so as to define new architecture and bridge protocols compatible and interoperable with provider bridges of 802.1ad standards, so that multiple provider bridge networks may be merged into at least 2²⁰ virtual local area networks (VLANs). The PBB is also known as media access control address in media access control address (MACinMAC).

Based on the 802.1ad standard, the 802.1ah standard may enable encapsulating a packet of a provider bridge completely in a packet of a provider backbone bridge, thus providing a hierarchical network model. In the hierarchical network, the media access control (MAC) address of a user is separated from the MAC address of a provider network equipment, and a tag for user data is also not separated from a tag of the provider.

Based on the 802.1ah standard, a provider backbone transport (PBT) method is proposed in the prior art, which is defined as a provider backbone bridge traffic engineering (PBB-TE) network in the IEEE 802.1 Qay. This method requires equipment for implementing PBT to support individual VLAN learning (IVL), some of the VLANs in the equipment relevant to PBT to be designated as the VLANs for PBT, and the designated VLANs to be used in a way of being separated from and independent of other ordinary VLANs. In addition, in the VLANs for PBT, the MAC address learning and the spanning tree protocol are disabled, and the broadcast and multicast function for unknown packets are disabled.

The MAC address and PBT VLAN Identifier (VID) of a target equipment are configured, and the MAC address and the PBT VID of the target equipment form tags forwarded in a series of Ethernet switches supporting the IVL. Thus, an Ethernet switched path is formed, which may be considered as a connection or a tunnel.

The PBT path is configured dynamically or statically through a provisioning and management system, and also maintains the state of a link. The provisioning and management system configures a forwarding table on a network node that an Ethernet switching path (ESP) passes, and the network node forwards the PBT packet according to the forwarding table.

The prior art has at least the following problem: Only one ESP is employed in the communication of the PBT network node of the prior art; if the ESP fails, the PBT communication is interrupted.

### SUMMARY OF THE INVENTION

An embodiment of the present invention provides a ring-based packet transmitting method, where the method configures a PBT/PBB forward ring and a PBT/PBB reverse ring based on a PBT/PBB ring network, so that when the PBT/PBB forward ring fails, the PBT/PBB reverse ring is used for transmission, and thus service interruption of the network caused by a fault of a single ESP in the PBT/PBB ring network is reduced.

An embodiment of the present invention provides a network system, which reduces service interruption of a network caused by a fault of a single ESP in a PBT/PBB ring network.

An embodiment of the present invention provides a node equipment, which is capable of being interconnected with one or more node equipments respectively through ports provided thereon to form a PBB or PBT ring.

In order to solve the above technical problems, the present invention provides a ring-based packet transmitting method, where the ring includes at least two node equipments interconnected to form at least two PBB or PBT rings. The method includes the following steps.

A received user packet is encapsulated;
Fault detection is performed on one or more PBB or PBT rings; and
When a fault is detected, a PBB or PBT ring without fault is selected based on a fault detection result to send the encapsulated packet to a target node equipment according to a corresponding relation between virtual media access control (VMAC) addresses and ports.

The present invention further provides a ring-based packet transmitting method, in which the ring includes at least two node equipments interconnected to form one PBB or PBT ring. The method includes the following steps.

A received user packet is encapsulated; and
Fault detection is performed on an active transmission path, and when a fault occurs in the active transmission path, the encapsulated packet is sent to a target node equipment through a standby transmission path.

The present invention further provides a network system. The system includes at least two node equipments interconnected with one or more node equipments respectively through ports provided thereon, so as to form one or more PBT/PBB rings.

The present invention further provides a node equipment, which includes at least two ports and a data processing unit.

The at least two ports are adapted to be interconnected with one or more node equipments respectively to form one or more PBB or PBT rings; and
The data processing unit is adapted to encapsulate a received user packet, perform fault detection on the one or more PBB or PBT rings, and select a PBB or PBT ring or a transmission path without fault to send the encapsulated packet to a target node equipment according to a corresponding relation between VMAC addresses and the ports when a fault is detected.

The technical solutions have the following advantages or beneficial effects: In the embodiments of the present invention, since the node equipments are interconnected with one or more node equipments respectively through the ports provided thereon to form one or more PBB or PBT rings, when a fault occurs in one PBB/PBT ring, another PBB/PBT ring may be used to transmit the packet; alternatively, when a fault occurs in the active transmission path, the standby transmission path may be selected to transmit the packet. In this way, communication interruption will not occur in the PBB/PBT ring network, and the PBB/PBT ring is protected.

### BRIEF DESCRIPTION OF THE DRAWINGS

FIG. 1 is a schematic view of a PBT node according to an embodiment of the present invention;
FIG. 2 is a schematic view of a network system according to a first embodiment of the present invention;
FIG. 3a is a schematic view of architecture of a PBT ring-based access network according to an embodiment of the present invention;
FIG. 3b is a schematic view of architecture of a PBT ring-based access network according to an embodiment of the present invention;
FIG. 3c is a schematic view of architecture of a PBT ring-based access network according to an embodiment of the present invention;
FIG. 4 is a schematic view of a node equipment according to a second embodiment of the present invention;
FIG. 5 is a schematic networking diagram according to an embodiment of the present invention;
FIG. 6 is a flow chart of a configuring stage according to a third embodiment of the present invention;
FIG. 7 is a flow chart of a fault detecting method according to the third embodiment of the present invention;
FIG. 8 is a flow chart of a fault detecting method according to the third embodiment of the present invention;
FIG. 9 is a flow chart of a fault detecting method according to the third embodiment of the present invention;
FIG. 10 is a flow chart of a fault protecting stage according to the third embodiment of the present invention;
FIG. 11 is a flow chart of a fault recovery detecting method according to the third embodiment of the present invention;
FIG. 12 is a flow chart of a recovery stage according to the third embodiment of the present invention;
FIG. 13a is a schematic networking diagram according to an embodiment of the present invention;
FIG. 13b is a schematic networking diagram according to an embodiment of the present invention;
FIG. 14 is a flow chart of a configuring stage according to a fourth embodiment of the present invention;
FIG. 15 is a flow chart of a fault detecting method according to the fourth embodiment of the present invention;
FIG. 16 is a flow chart of a fault detecting method according to the fourth embodiment of the present invention;
FIG. 17 is a flow chart of a fault protecting stage according to the fourth embodiment of the present invention;
FIG. 18 is a flow chart of a recovery stage according to the fourth embodiment of the present invention; and
FIG. 19 is a schematic networking diagram according to an embodiment of the present invention.

### DETAILED DESCRIPTION OF THE EMBODIMENTS

In order to make the embodiments of the present invention more comprehensible, the technical solutions of the present invention are described below with reference to the accompanying drawings.

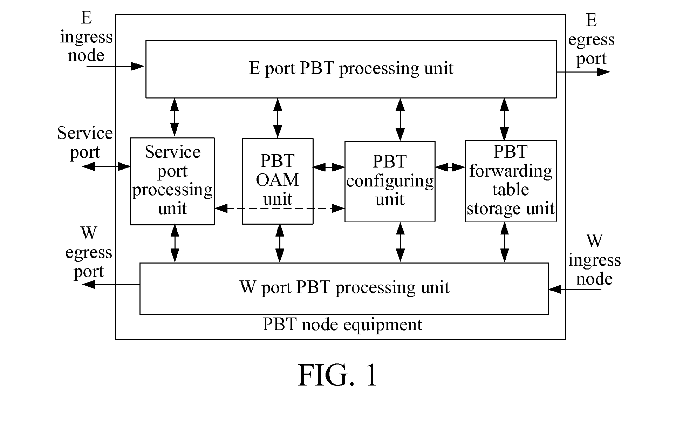

Firstly, a PBT node is described. Referring to FIG. 1, the PBT node includes a PBT configuring unit, a PBT forwarding table storage unit, a PBT operations, administration and maintenance (OAM) unit, an E port PBT processing unit, a W port PBT processing unit, and a service port processing unit.

The PBT configuring unit is adapted to configure parameters of a PBT ring such as VMAC addresses and enabled ports, configure operation modes for the service port processing unit and the PBT OAM unit, and create the VMAC according to the parameters of the PBT ring.

The PBT forwarding table storage unit is adapted to store a forwarding table configured by the PBT configuring unit, for example, a unicast MAC/VMAC forwarding table.

The PBT OAM unit is adapted to operate, administrate and maintain various node equipments of the PBT ring or the PBT ring itself, perceive a fault of the PBT ring by detecting an OAM packet, trigger the PBT configuring unit to configure an operation mode of the service port, and support two operation modes of PBT ring fault detection or fault recovery detection: active mode and passive mode. The passive mode is further divided into dual-transmit-dual-receive passive mode, dual-transmit-selective-receive passive mode and selective-transmit-selective-receive passive mode; the OAM packet generated by the OAM unit is dually transmitted or selectively transmitted to the E port PBT processing unit or the W port PBT processing unit according to the operation mode, and the OAM packet from the E port PBT processing unit or the W port PBT processing unit is dually received or selectively received according to the operation mode.

The E port PBT processing unit is adapted to be interconnected with two node equipments through an E ingress port and an E egress port respectively to form a closed forward ring, receive a PBT packet through the E ingress port, and process the PBT packet according to a destination MAC address (D-MAC); if the D-MAC is the address of the current node, the E port PBT processing unit decapsulates the received PBT packet, and sends the decapsulated packet to the service port processing unit; if the D-MAC is not the address of the current node, the E port PBT processing unit forwards the received PBT packet through the E egress port according to the VMAC forwarding table, or discards the PBT packet; and the E port PBT processing unit further encapsulates the PBT packet from the service port processing unit, and then forwards the PBT packet through the E egress port according to the VMAC forwarding table.

The W port PBT processing unit is adapted to be interconnected with two node equipments through a W ingress port and a W egress port respectively to form a closed reverse ring, receive the PBT packet through the W ingress port, and process the PBT packet correspondingly according to the D-MAC; if the D-MAC is the address of the current node, the W port PBT processing unit performs PBT decapsulation on the PBT packet, and sends the decapsulated packet to the service port processing unit; if the D-MAC is not the address of the current node, the W port PBT processing unit forwards the received PBT packet through the W egress port according to the VMAC forwarding table, or discards the PBT packet; the W port PBT processing unit further performs PBT encapsulation on the user packet from the service port processing unit, and then forwards the PBT packet through the W egress port according to the VMAC forwarding table.

The service port processing unit is adapted to receive the user packet through a service port, send the packet to the E port PBT processing unit or the W port PBT processing unit in a dual-transmit or selective-transmit mode according to a configured operation mode, receive the decapsulated PBT packet from the E port PBT processing unit or the W port PBT processing unit in a dual-receive or selective-receive mode according to the configured operation mode. The operation modes of the service port include: 1+1 operation mode (that is, dual-transmit-dual-receive mode), 1+1 forward ring operation mode/1+1 reverse ring operation mode (that is, dual-transmit-selective-receive mode), 1:1 operation mode/1:1 forward ring operation mode/1:1 reverse ring operation mode (that is, selective-transmit-selective-receive mode); for "1+1", "dual-transmit" is typically required; for "1:1", "selective-transmit" is typically required; for "forward ring operation", "E port selective-receive" is typically required; for "reverse ring operation", "W port selective-receive" is typically required.

It should be noted that, the structure of a PBB node is basically the same as that of a PBT node, and the structure of a PBB ring network is also basically the same as that of a PBT ring network.

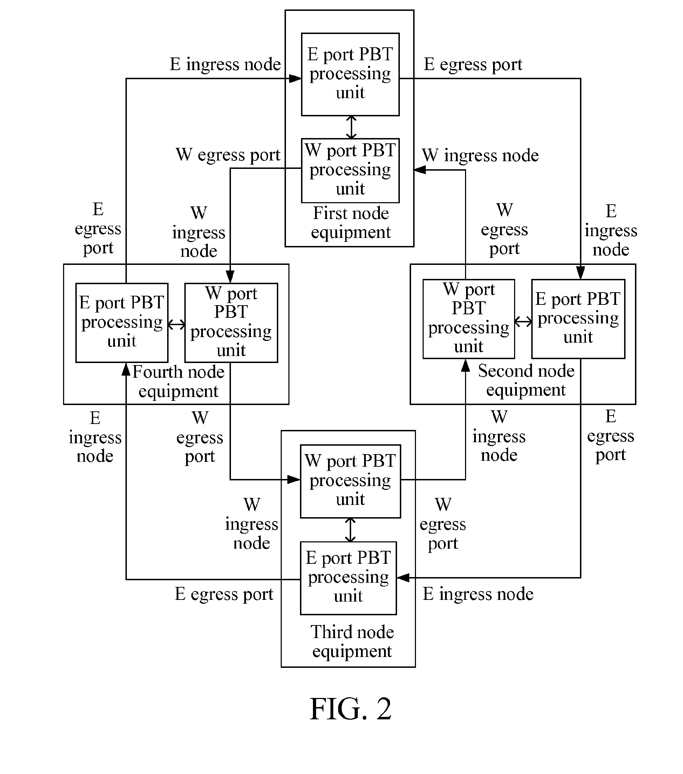

Embodiment 1: a network system. As shown in FIG. 2, the node equipment includes four ports: an E ingress port, an E egress port, a W ingress port, and a W egress port, where the E ingress port and the E egress port are used for the forward ring, and the W ingress port and the W egress port are used for the reverse ring.

The node equipment is interconnected with other node equipments through ports provided thereon respectively to form two closed rings, that is, a closed ring composed of a first node equipment - a second node equipment - a third node equipment - a fourth node equipment, and a closed ring composed of the first node equipment - the fourth node equipment - the third node equipment - the second node equipment.

It should be noted that, multiple node equipments may form multiple PBB or PBT rings, and when a fault occurs in one PBB or PBT ring, another PBB or PBT ring may be used to transmit packets. Thus, communication interruption will not occur in the PBB or PBT ring network, and the PBB or PBT ring is protected.

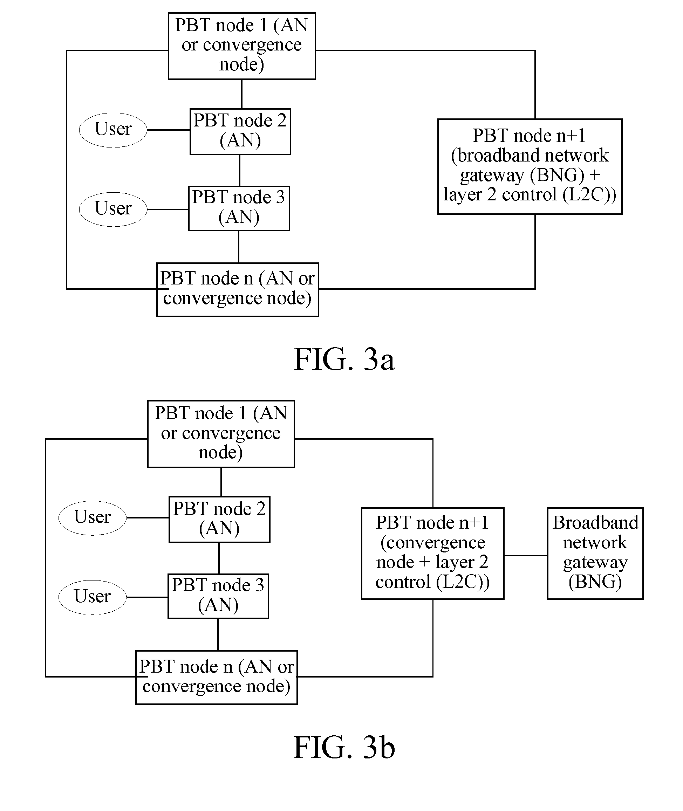

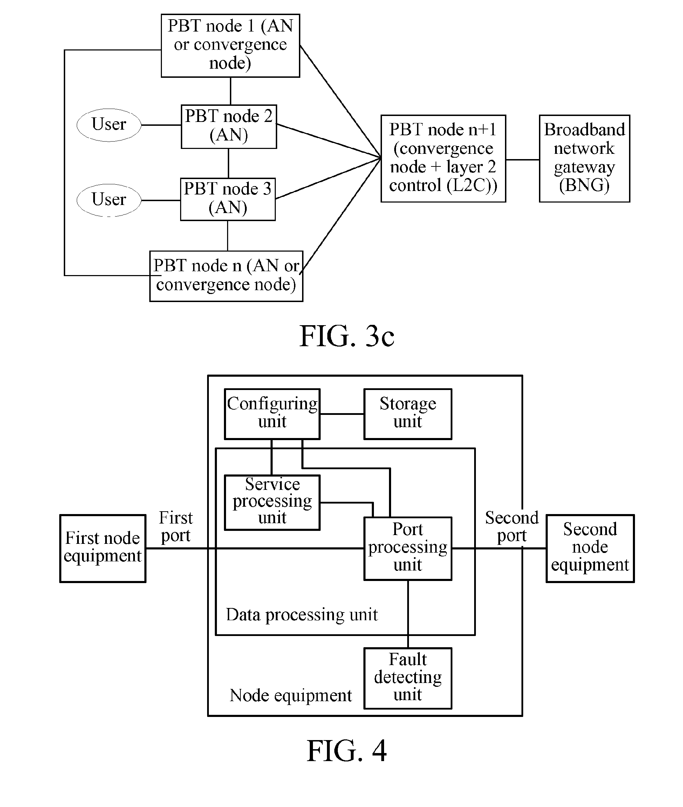

It should be noted that, when the node equipment is a PBB or PBT node, the access nodes (AN), convergence nodes and/or IP edge nodes supporting PBB or PBT forms a single ring, dual rings or multiple rings, as shown in FIGs. 3a, 3b and 3c. In addition, the IP edge nodes may be a broadband remote access server (BRAS) or a broadband network gateway (BNG).

It should be noted that, multiple node equipments may form a single ring, and when a fault occurs in an active transmission path, a standby transmission path may be selected to transmit packets, so that the protection to the PBB or PBT ring is achieved.

Embodiment 2: a node equipment. As shown in FIG. 4, the node equipment includes at least two ports, a configuring unit, a storage unit, a fault detecting unit, and a data processing unit.

The at least two ports are adapted to be interconnected with the first node equipment and the second equipment respectively to form one or more PBB or PBT rings;

The configuring unit is adapted to configure an operation mode and VMAC addresses, enable corresponding ports according to the operation mode, and create a corresponding relation between the VMAC addresses and the ports. Here, the corresponding relation between the VMAC addresses and the ports is typically represented by a VMAC forwarding table;

The storage unit is adapted to store the VMAC addresses created by the configuring unit or the corresponding relation between VLAN identifiers and the ports, for example, the VMAC forwarding table; and

The fault detecting unit is adapted to determine whether a fault occurs in the PBB or PBT ring or a transmission path, or determine whether the fault of the PBB or PBT ring or the transmission path recovers to normal, and send a fault detection result to the data processing unit.

The data processing unit includes a service processing unit and a port processing unit.

The service processing unit is adapted to receive a user packet, and send the user packet to the port processing unit according to a configured operation mode; and
The port processing unit is adapted to encapsulate the user packet, select a PBB or PBT ring or a transmission path without fault to send the encapsulated packet to a target node equipment according to the configured operation mode, the fault detection result and the VMAC forwarding table, and select the PBB or PBT ring or the transmission path without fault to send the encapsulated packet to the target node equipment according to the fault detection result.

Optionally, the port processing unit includes a first port processing unit and a second port processing unit.

The first port processing unit is adapted to perform PBB or PBT encapsulation on the user packet, send the PBB or PBT encapsulated packet to the target node equipment according to the VMAC forwarding table, receive the PBB or PBT encapsulated packet, and when the target media access address of the packet is a local address, perform PBB or PBT decapsulation on the PBB or PBT encapsulated packet and then send it to the service port processing unit, and send the user packet or the PBB or PBT encapsulated packet to the second port processing unit according to the fault detection result; and
The second port processing unit is adapted to perform PBB or PBT encapsulation on the user packet, send the PBB or PBT encapsulated packet to the target node equipment according to the VMAC forwarding table, receive the PBB or PBT encapsulated packet, and when the target media access address of the packet is a local address, perform PBB or PBT decapsulation on the PBB or PBT encapsulated packet and then send it to the service port processing unit, and send the user packet or the PBB or PBT encapsulated packet to the first port processing unit according to the fault detection result.

The first port processing unit is corresponding to the E port PBT processing unit in FIG. 1, and the second port processing unit is corresponding to the W port PBT processing unit.

It should be noted that, this embodiment is directed to the case that at least three node equipments are interconnected to form PBB or PBT rings. In addition, this embodiment may also be directed to the case that two node equipments are interconnected to form PBB or PBT rings.

It should be noted that, the ports of the node equipments described in the first embodiment and second embodiment are arranged in pairs; however, the ports of the node equipments provided in the embodiments of the present invention may also not be arranged in pairs.

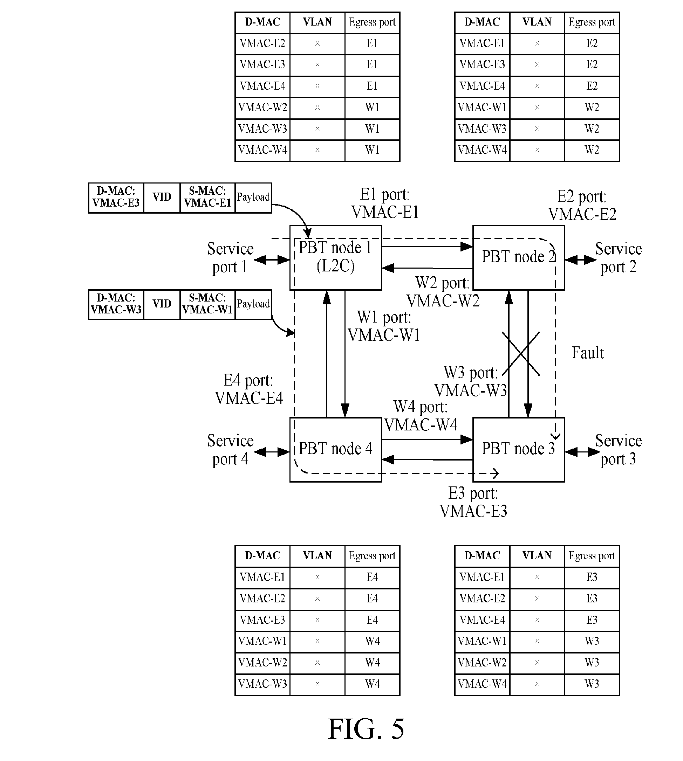

FIG. 5 is a schematic networking diagram according to an embodiment of the present invention, which shows a 1+1 operation mode of a PBT ring of based on VMAC. As shown in FIG. 5, one PBT node on the ring is set to be a PBT ring control center, for example, the layer 2 control (L2C) in FIG. 5, which is responsible for configuring a VMAC forwarding table, enabled ports, and operation modes of the service port processing unit and the PBT OAM unit for nodes in the entire PBT ring. The L2C may employ the Generalized MultiProtocol Label Switching (GMPLS) protocol or L2C protocol to configure the nodes in the PBT ring.

It is assumed that a fault has occurred in the connection between the PBT node 2 and the PBT node 3 in FIG. 5.

Embodiment 3: a ring-based packet transmitting method. This embodiment is directed to the dual-transmit-dual-receive situation for unicast, and FIG. 5 is a schematic networking diagram of this embodiment. In this embodiment, the method is divided into five stages, that is, configuring stage, fault detecting stage, fault protecting stage, recovery detecting stage and recovery stage, which described below respectively with reference to the accompanying drawings.

Firstly, two VMAC addresses are set for each PBT node: VMAC-E and VMAC-W. Normally, the number of the VMAC addresses set for each PBT node is the same as the number of the rings. The VMAC addresses are configured as follows:
1. The VMAC-E address is used for a PBT forward ring, the VMAC-W address is used for a PBT reverse ring.
2. Explicit mapping relation or mapping rule exists between the VMAC-E address and the VMAC-W address, with each PBT node storing its own VMAC-E and VMAC-W addresses. One possible mapping rule is that the last bit of VMAC-E is 0, the last bit of VMAC-W is 1, and other bits of VMAC-E and VMAC-W are all the same.

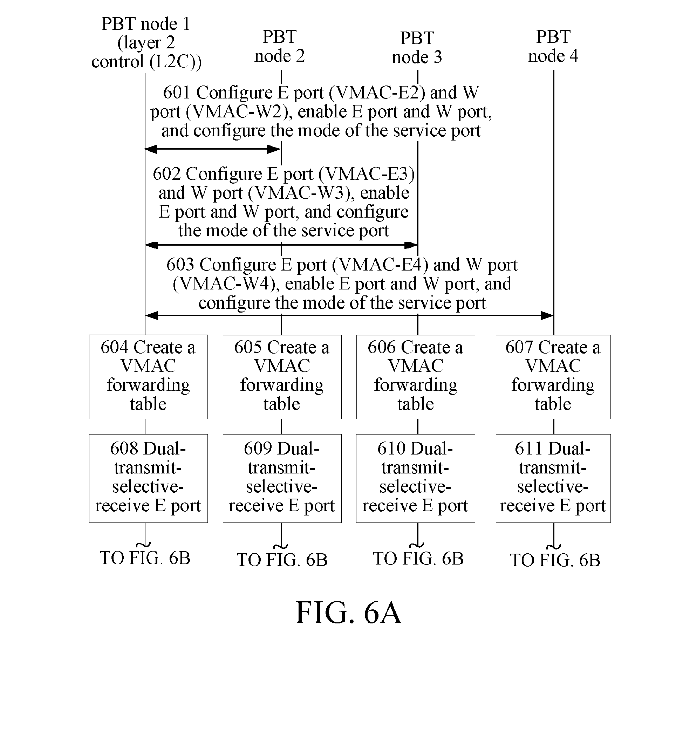

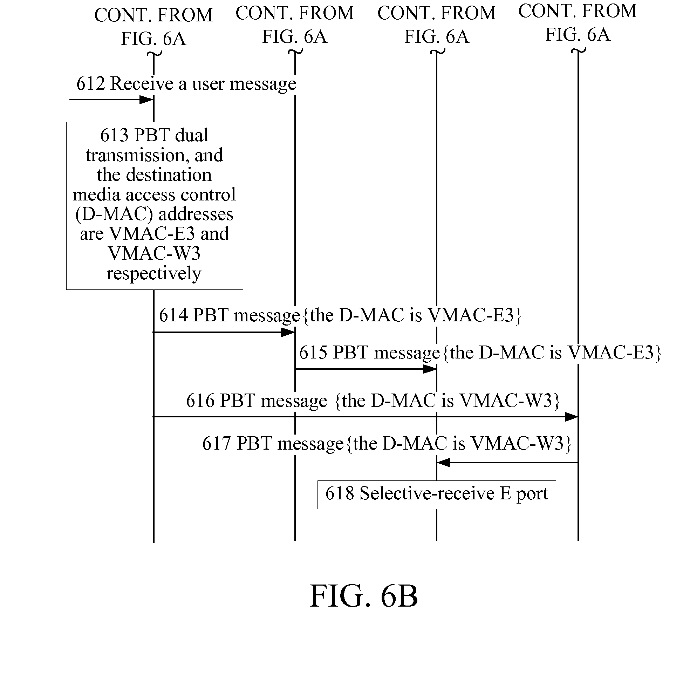

I. The process of the configuring stage in the third embodiment is as shown in FIG. 6, which includes the following steps.
   Steps 601-603: The PBT node 1 configures parameters of a PBT ring dynamically through the L2C protocol, for example, configures the VMAC addresses of each node of the PBT ring, enables E ports and W ports (that is, configures the PBT forward ring and reverse ring to operate simultaneously), configures the operation mode of the service port to be a 1+1 forward ring operation mode (that is, the dual-transmit-selective-receive E port).
   Steps 604-607: Each node of the PBT ring creates a VMAC forwarding table according to the configured parameters of the PBT ring (for example, VMAC addresses and enabled ports). The VMAC forwarding table may be configured statically or dynamically. The configuring rules of the forwarding table are as follows:
   1. If D-MAC is VMAC-Ex (for example, VMAC-E1/2/3/4), as shown in FIG. 5, the egress port must be an E port (for example, E1/2/3/4).
   2. If D-MAC is VMAC-Wx (for example, VMAC-W1/2/3/4), as shown in FIG. 5, the egress port must be a W port (for example, W1/2/3/4).

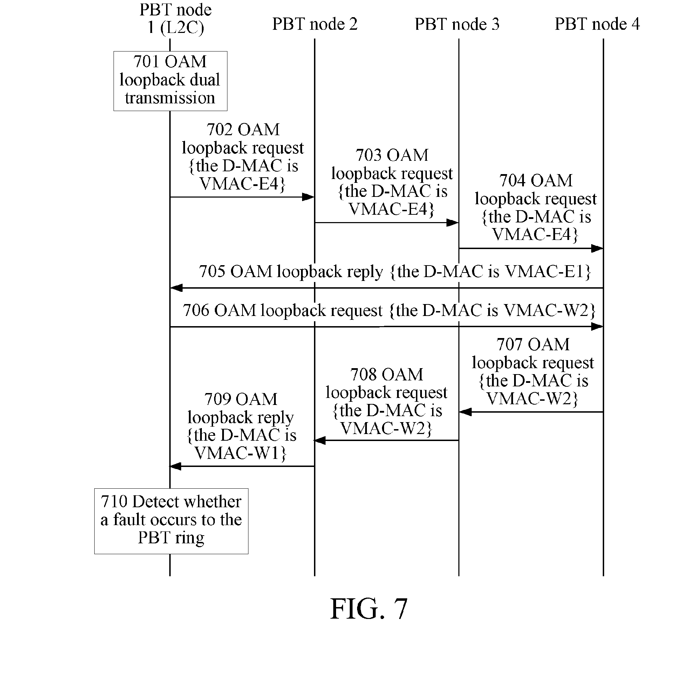

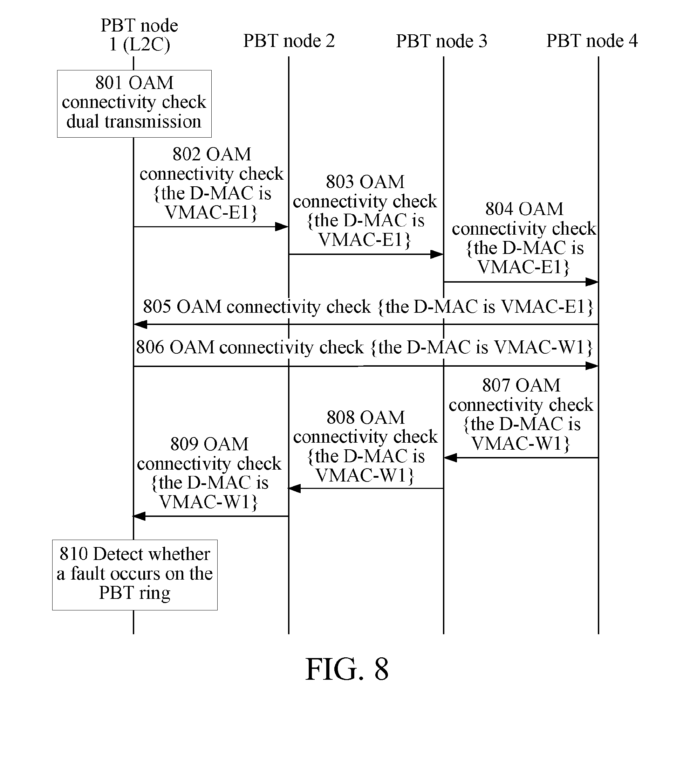

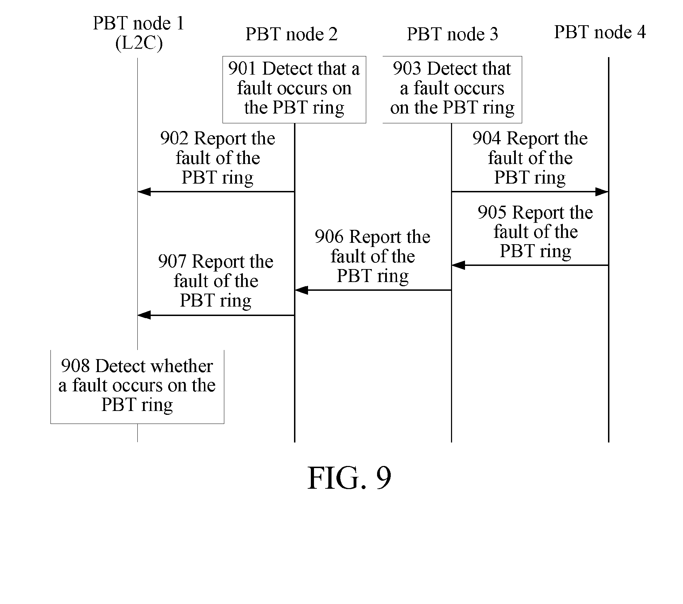

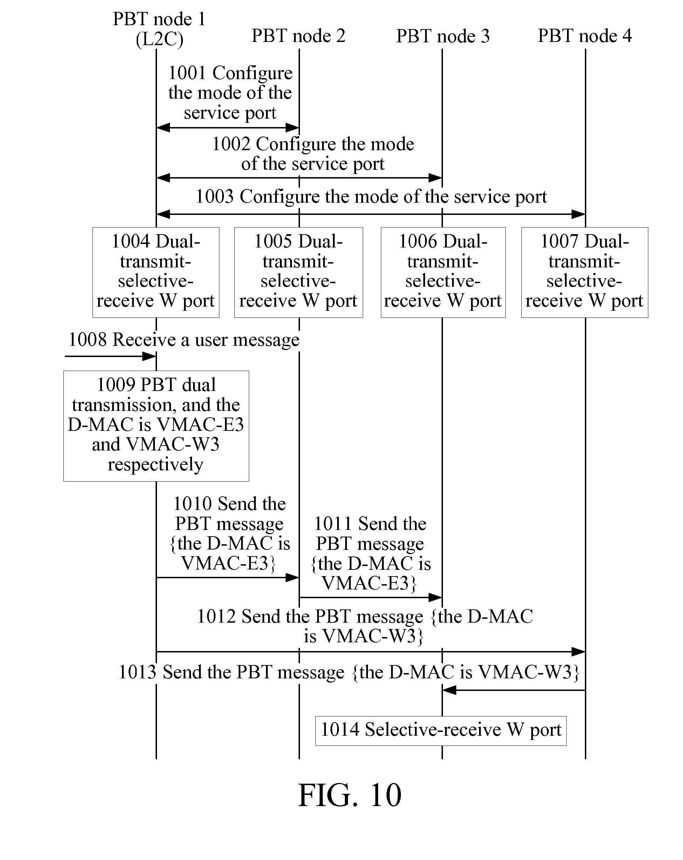

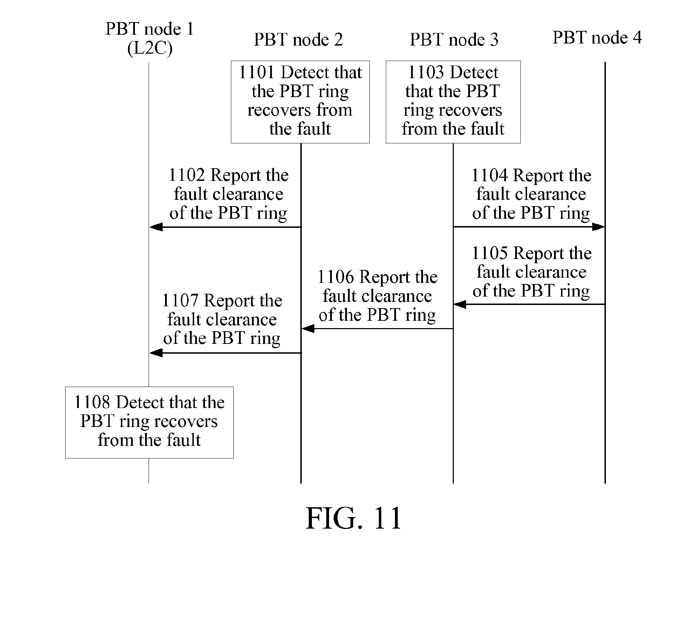

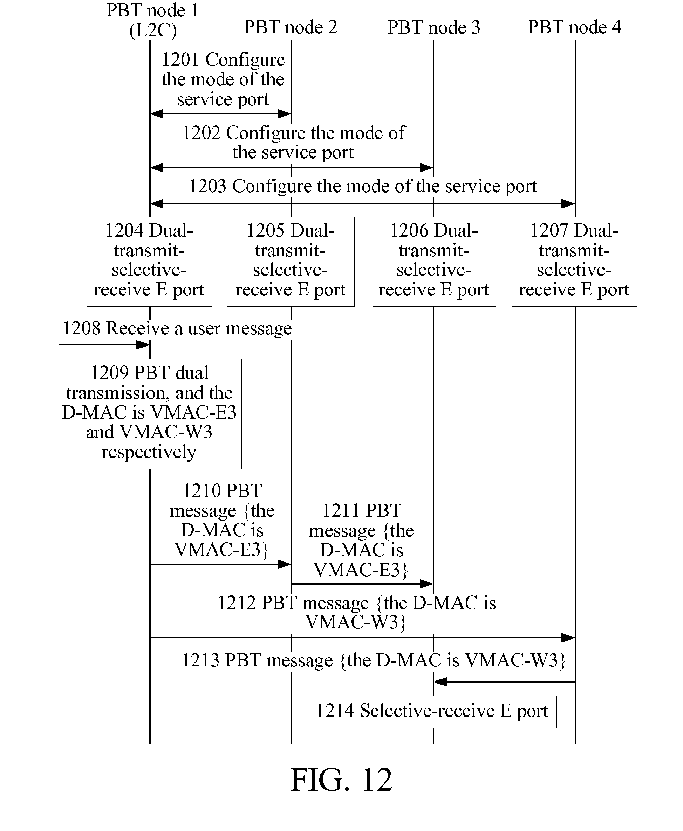

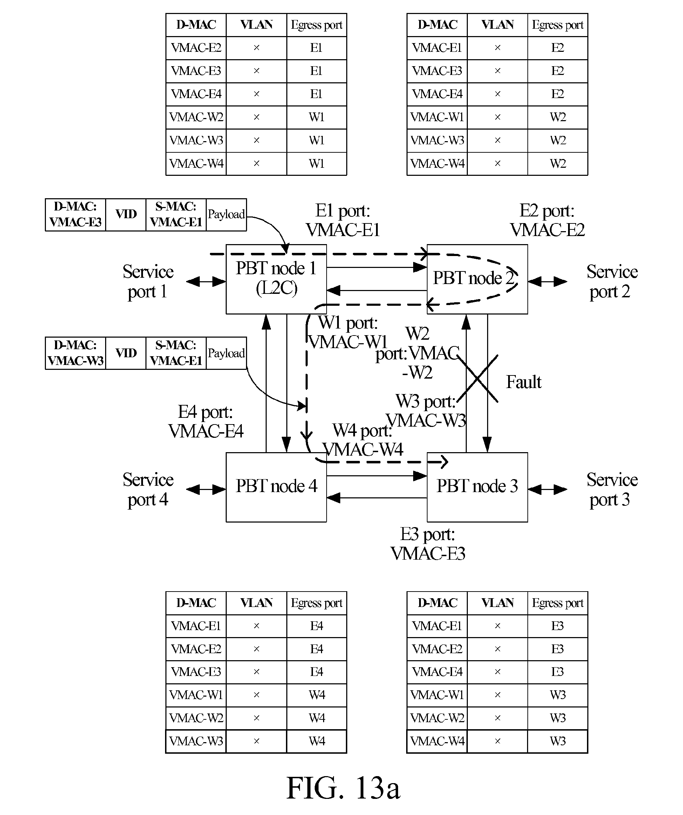

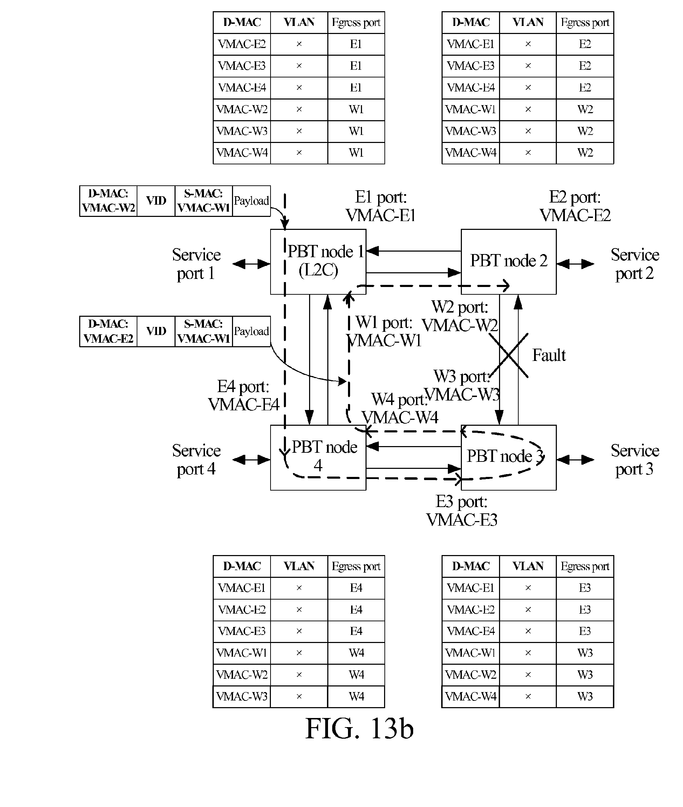

   Steps 608-611: The service ports of each node of the PBT ring activate the dual-transmit-selective-receive E port according to the configured operation mode.
   Step 612: The service port of the PBT node 1 receives a user packet that needs to be sent to the PBT node 3.
   Step 613: The PBT node 1 performs PBT encapsulation on the received user packet, generates two PBT packets, i.e. a PBT packet sent by the forward ring and a PBT packet sent by the reverse ring, and then sends the packets to the PBT node 3 respectively. The D-MAC address of the PBT packet sent by the forward ring is VMAC-E3, and the D-MAC address of the PBT packet sent by the reverse ring is VMAC-W3.
   Steps 614-615: The PBT node 1 sends the encapsulated PBT packet to the PBT node 3 through the forward ring according to the VMAC forwarding table, and the D-MAC address of the packet is VMAC-E3.
   Steps 616-617: The PBT node 1 sends the encapsulated PBT packet to the PBT node 3 through the reverse ring according to the VMAC forwarding table, the D-MAC address of the packet is VMAC-W3.
   Step 618: The PBT node 3 selectively receives the PBT packet from the E port, and performs PBT decapsulation on the packet to obtain the user packet, and at the same time, discards the PBT packet from the W port.
II. The fault detecting stage of this embodiment is described as follows. Several methods may be used for fault detection, which are described below with reference to the accompanying drawings.
   The process of the first fault detecting method is as shown in FIG. 7, which includes the following steps.
   Step 701: The PBT node 1 (for example, the L2C control in FIG. 7) performs OAM loopback dual transmission.
   Steps 702-704: The PBT node 1 sends OAM loopback request packet periodically to the PBT node 4 through the forward ring according to the VMAC forwarding table, and the D-MAC address of the packet is VMAC-E4.
   Step 705: The PBT node 4 returns an OAM loopback reply packet to the PBT node 1 through the forward ring according to the VMAC forwarding table, and the D-MAC address of the packet is VMAC-E1.
   Steps 706-708: The PBT node 1 sends the OAM loopback request packet periodically to the PBT node 2 through the reverse ring according to the VMAC forwarding table, and the D-MAC address of the packet is VMAC-W2, that is, the PBT node 2 is a tail node of the PBT reverse ring.
   Step 709: The PBT node 2 returns the OAM loopback reply packet to the PBT node 1 according to the VMAC forwarding table, and the D-MAC address of the packet is VMAC-Wl .
   Step 710: It is detected whether a fault occurs in the PBT ring.
   If the ring has no fault, the loopback request sent by the forward ring may reach the PBT node 4, and the loopback request sent by the reverse ring may reach the PBT node 2. If the PBT node 1 fails to receive the OAM loopback reply from the E port in a specific time, it indicates that a fault occurs in the PBT forward ring; if the PBT node 1 fails to receive the OAM loopback reply from the W port in a specific time, it indicates that a fault occurs in the PBT reverse ring. If a non-first node of the PBT ring fails to detect the OAM loopback reply from the E port in the specific time, the non-first node of the PBT ring knows that a fault occurs in the PBT forward ring; if the non-first node of the PBT ring fails to detect the OAM loopback reply from the W port in the specific time, the non-first node of the PBT ring knows that a fault occurs in the PBT reverse ring.
   The process of the second fault detecting method is as shown in FIG. 8, which includes the following steps.
   Step 801: The PBT node 1 (for example, the L2C control in FIG. 8) performs OAM connectivity check dual transmission.
   Steps 802-804: The PBT node 1 sends an OAM connectivity check packet periodically to the PBT node 4 through the forward ring according to the VMAC forwarding table, and the D-MAC address of the packet is the VMAC address of the forward ring of the PBT node 1 (that is, VMAC-E1). The OAM connectivity check packet also needs to be returned to the PBT node 1 through the forward ring when no fault occurs in the ring.
   Step 805: The PBT node 4 sends the OAM connectivity check packet to the PBT node 1 through the forward ring according to the VMAC forwarding table, and the D-MAC address of the packet is the VMAC address of the forward ring of the PBT node 1 (that is, VMAC-E 1).
   Step 806: The PBT node 1 sends the OAM connectivity check packet periodically to the PBT node 4 through the reverse ring according to the VMAC forwarding table, and the D-MAC address of the packet is the VMAC address of the reverse ring of the PBT node 1 (that is, VMAC-W1). The OAM connectivity check packet also needs to be returned to the PBT node 1 through the reverse ring when no fault occurs in the ring.
   Steps 807-809: The PBT node 4 sends the OAM connectivity check packet to the PBT node 1 through the reverse ring according to the VMAC forwarding table, and the D-MAC address of the packet is the VMAC address of the reverse ring of the PBT node 1 (that is, VMAC-W1).
   Step 810: It is detected whether a fault occurs in the PBT ring.
   If the PBT node 1 fails to receive the OAM connectivity check packet through the E port in a specific time, it indicates that a fault occurs in the PBT forward ring; if the PBT node 1 fails to receive the OAM connectivity check packet through the W port in a specific time, it indicates that a fault occurs in the PBT reverse ring.
   If a non-first node of the PBT ring fails to detect the OAM connectivity check packet from the E port in the specific time, the non-first node of the PBT ring knows that a fault occurs in the PBT forward ring; if the non-first node of the PBT ring fails to detect the OAM connectivity check packet from the W port in the specific time, the non-first node of the PBT ring knows that a fault occurs in the PBT reverse ring.
   The process of the third fault detecting method is as shown in FIG. 9, which includes the following steps.
   Step 901: When a fault occurs in the connection between the PBT node 2 and the PBT node 3, the PBT node 2 detects that a fault occurs in the PBT ring.
   Step 902: The PBT node 2 reports the fault of the PBT ring to the PBT node 1 actively. In this way, the PBT node 1 knows that the fault of the PBT ring occurs between the PBT node 2 and the PBT node 3.
   Step 903: The PBT node 3 detects the fault of the PBT ring.
   Steps 904-907: The PBT node 3 reports the fault of the PBT ring to the PBT node 1 actively.
   Step 908: The PBT node 1 detects the fault of the PBT ring. The PBT node 1 knows that the fault of the PBT ring occurs between the PBT node 2 and the PBT node 3 according to the information reported by the PBT node 2 or the PBT node 3. The nodes through which the fault packet of the PBT ring passes are also informed of the fault of the PBT forward ring.
III. The process of the fault protecting stage is as follows.
   In this embodiment, when it is detected that a fault occurs in the forward ring, an encapsulated PBT packet is sent to the PBT node 3 (the target node) through the reverse ring. The specific implementation is as shown in FIG. 10, which includes the following steps.
   Steps 1001-1003: The parameters of the PBT ring are configured; for example, the operation mode of the service port of each node is configured to be a 1+1 reverse ring operation mode, and the W ports are enabled. The configuration may be implemented by the L2C control, or when each node of the PBT ring perceives the fault of the PBT ring by checking the OAM packet, the operation mode of the service port is configured automatically to be the 1+1 reverse ring operation mode.
   Steps 1004-1007: The service port of each node of the PBT ring activates the dual-transmit-selective-receive W port according to the configured operation mode.
   Step 1008: The service port of the PBT node 1 receives the user packet that needs to be sent to the PBT node 3.
   Step 1009: The PBT node 1 performs PBT encapsulation on the received user packet, generates two PBT packets: a PBT packet sent by the forward ring and a PBT packet sent by the reverse ring, and then sends the packets to the PBT node 3 respectively. The D-MAC address of the PBT packet sent by the forward ring is VMAC-E3, and the D-MAC address of the PBT packet sent by the reverse ring is VMAC-W3.
   Steps 1010-1011: The PBT node 1 sends the encapsulated PBT packet to the PBT node 3 through the forward ring according to the VMAC forwarding table, and the D-MAC address of the packet is VMAC-E3.
   Steps 1012-1013: The PBT node 1 sends the encapsulated PBT packet to the PBT node 3 through the reverse ring according to the VMAC forwarding table, and the D-MAC address of the packet is VMAC-W3.
   Step 1014: The PBT node 3 selectively receives the PBT packet from the W port, and performs decapsulation on the packet to obtain the user packet.
IV. The process of the recovery detecting stage is as follows.
   The process of the fault recovery detecting method is similar to that of the fault detecting method. For the first or the second fault detecting method, if the first node of the PBT ring receives the OAM loopback reply or the connectivity check packet through the W port in a specific time, it indicates that the PBT forward ring recovers from the fault; if a non-first node of the PBT ring recovers to receive the OAM loopback or connectivity check packet from the E port in a specific time, the non-first node of the PBT ring knows that the PBT forward ring recovers from the fault.
   The third fault recovery detecting method is described below with reference to FIG. 11, which includes the following steps.
   Step 1101: The PBT node 2 detects that the PBT ring recovers from the fault.
   Step 1102: The PBT node 2 reports fault clearance of the PBT ring to the PBT node 1 actively.
   Step 1103: The PBT node 3 detects that the PBT ring recovers from the fault.
   Steps 1104-1107: The PBT node 3 reports the fault clearance of the PBT ring to the PBT node 1 actively.
   Step 1108: The PBT node 1 detects that the PBT ring recovers from the fault; the nodes through which the fault packet of the PBT ring passes also know that the PBT ring recovers from the fault.
   V The process of the recovery stage is as follows.
   The process of the recovery stage is as shown in FIG. 12, which includes the following steps.
   Steps 1201-1203: The parameters of the PBT ring are configured; for example, the operation mode of the service port of each node is configured to be a 1+1 forward ring operation mode, and the E ports are enabled. The configuration may be implemented by the L2C control, or when each node of the PBT ring perceives that the PBT ring recovers from the fault by checking the OAM packet, the operation mode of the service port is configured automatically to be the 1+1 forward ring operation mode.
   Steps 1204-1214 are the same as Steps 608-618. FIGs. 13a and 13b are two schematic networking diagrams according to an embodiment of the present invention, which show the 1:1 operation mode of the PBT ring based on VMAC; one PBT node on the ring is set to be an L2C control responsible for configuring a VMAC forwarding table, enabled ports (for example, E ports or W ports) and operation mode of the service port processing unit and the PBT OAM unit for nodes in the entire PBT ring. The L2C may employ the Generalized MultiProtocol Label Switching (GMPLS) protocol or L2C protocol to configure the nodes in the PBT ring.
   It is assumed that a fault occurs in the connection between the PBT node 2 and the PBT node 3 in FIGs. 13a and 13b.
   Embodiment 4: a ring-based packet transmitting method. This embodiment is directed to a selective-transmit-selective-receive situation for unicast, and FIGs. 13a and 13b are schematic networking views of this embodiment. In this embodiment, the method is divided into five stages, that is, configuring stage, fault detecting stage, fault protecting stage, recovery detecting stage and recovery stage. The stages are each described below respectively with reference to the accompanying drawings.

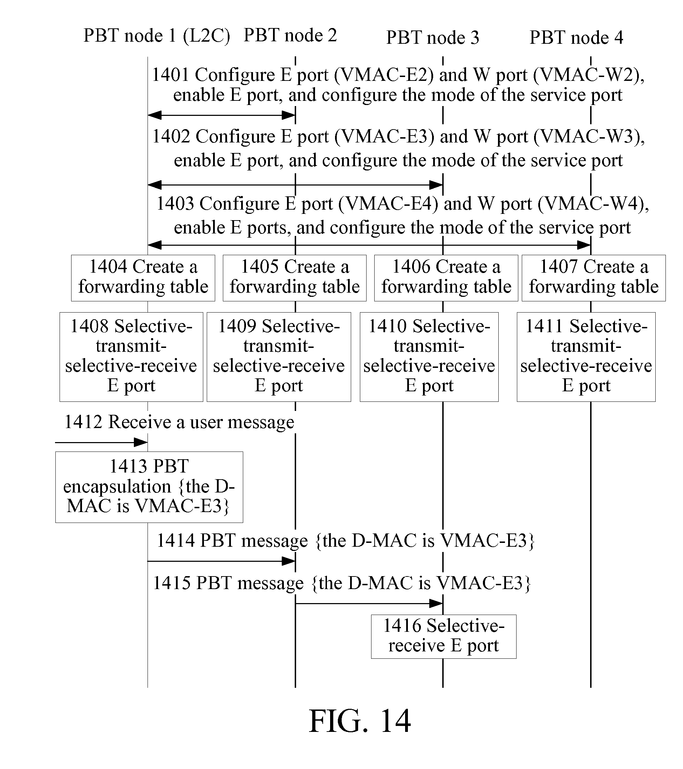

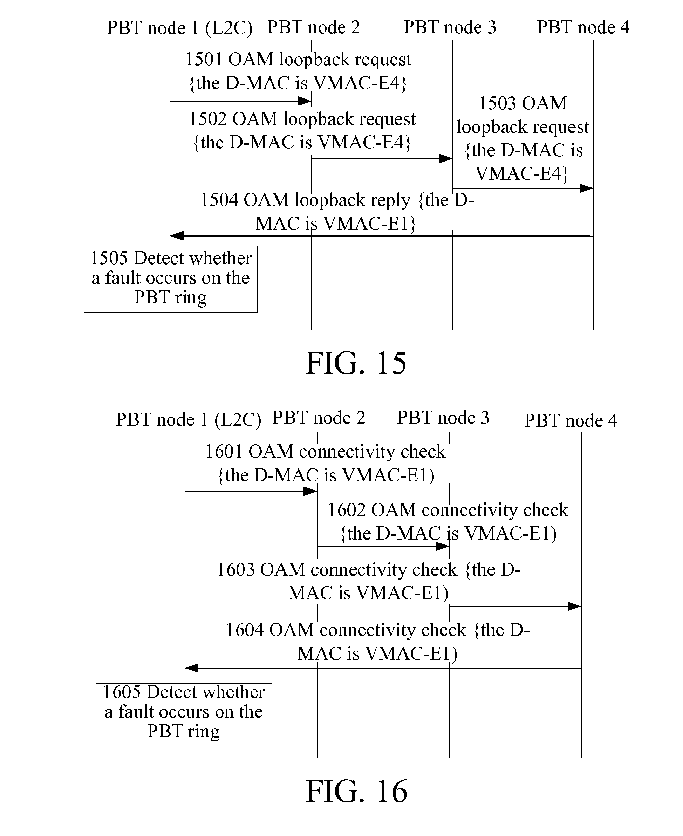

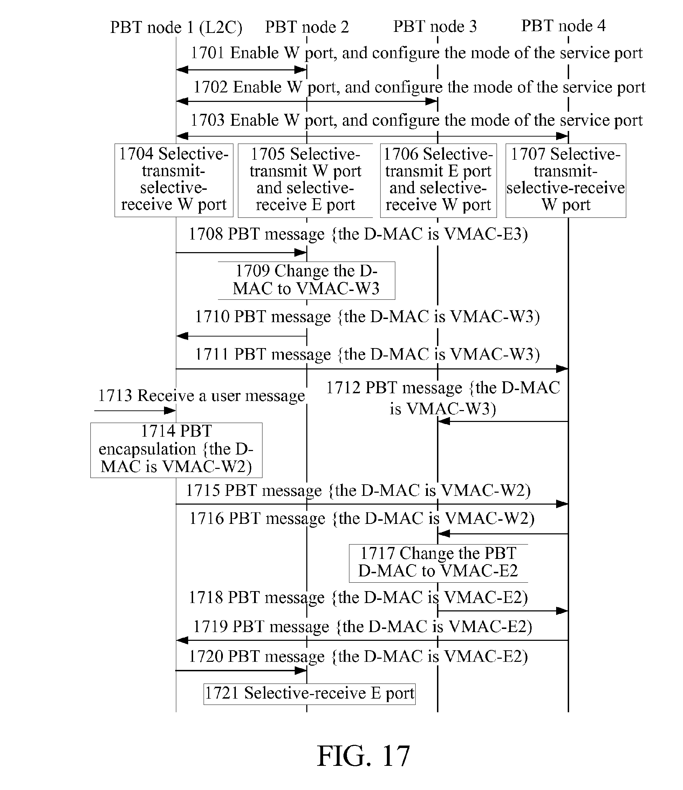

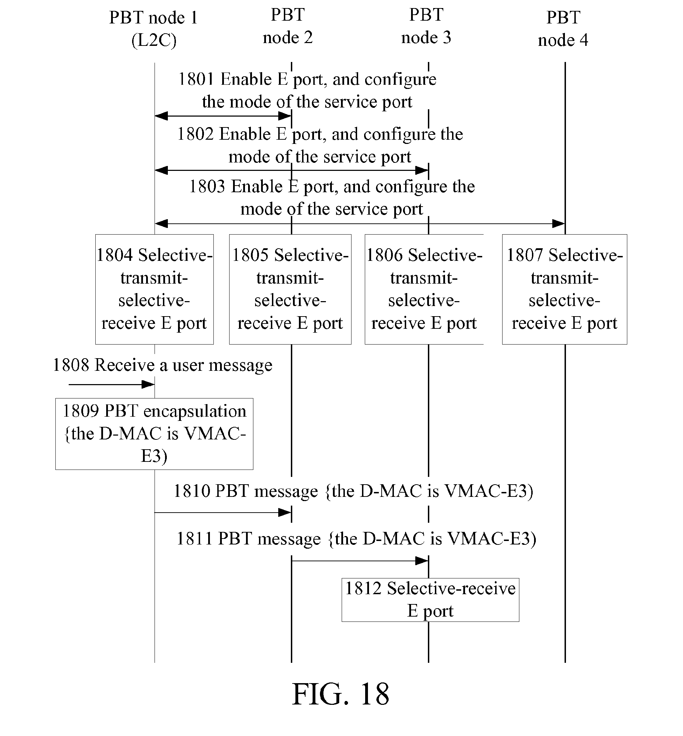

I. The process of the configuring stage in the fourth embodiment is as shown in FIG. 14, which includes the following steps.
   Steps 1401-1403: The L2C control (that is, the PBT node 1) configures the parameters of the PBT ring dynamically, for example, configures the VMAC addresses of each node of the PBT ring, enables the E ports (that is, configures the PBT forward ring to operate), configures the operation mode of the service port to be a 1:1 forward ring operation mode (that is, selective-transmit-selective-receive E port).
   It should be noted that, the method for configuring the VMAC addresses of each node of the PBT ring in this embodiment is the same as that in the third embodiment.
   Steps 1404-1407: Each node of the PBT ring creates a VMAC forwarding table according to the configured parameters of the PBT ring.
   Steps 1408-1411: The service port of each node of the PBT ring activates the selective-transmit-selective-receive E port according to the configured operation mode.
   Step 1412: The service port of the PBT node 1 receives the user packet that needs to be sent to the PBT node 3.
   Step 1413: The PBT node 1 performs PBT encapsulation on the received user packet to generate a PBT packet, and the D-MAC address of the packet is VMAC-E3.
   Steps 1414-1415: The PBT node 1 sends the encapsulated PBT packet to the PBT node 3 through the forward ring according to the VMAC forwarding table, and the D-MAC address of the packet is VMAC-E3.
   Step 1416: The PBT node 3 selectively receives the PBT packet from the E port, and performs encapsulation on the packet to obtain the user packet.
II. The fault detecting stage of this embodiment is described as follows. Several methods may be used for fault detection, which are described below with reference to the accompanying drawings.
   The process of the first fault detecting method is as shown in FIG. 15, which includes the following steps.
   Steps 1501-1503: The PBT node 1 sends an OAM loopback request packet periodically to the PBT node 4 through the forward ring according to the VMAC forwarding table, and the D-MAC address of the packet is VMAC-E4, that is, the PBT node 4 is the tail node of the PBT forward ring.
   Step 1504: The PBT node 4 sends an OAM loopback reply packet to the PBT node 1 according to the VMAC forwarding table, and the D-MAC address of the packet is VMAC-E1.
   Step 1505: It is detected whether a fault occurs in the PBT ring.
   If the ring has no fault, the loopback request sent by the forward ring may reach the PBT node 4, if the PBT node 1 fails to receive an OAM loopback reply from the E port in a specific time, it indicates that a fault occurs in the PBT forward ring; if a non-first node of the PBT ring fails to detect the OAM loopback packet from the E port in a specific time, the non-first node of the PBT ring knows that a fault occurs in the PBT forward ring.
   The process of the second fault detecting method is as shown in FIG. 16, which includes the following steps.
   Steps 1601-1603: The PBT node 1 sends an OAM connectivity check packet periodically to the PBT node 4 through the forward ring according to the VMAC forwarding table, and the D-MAC address of the packet is the VMAC address of the forward ring of the PBT node 1 (that is, VMAC-E1). The OAM connectivity check packet also needs to be returned to the PBT node 1 through the forward ring when no fault occurs in the ring.
   Step 1604: The PBT node 4 sends the OAM connectivity check packet to the PBT node 1 through the forward ring according to the VMAC forwarding table, and the D-MAC address of the packet is the VMAC address of the forward ring of the PBT node 1 (that is, VMAC-E1).
   Step 1605: It is detected whether a fault occurs in the PBT ring.
   If the PBT node 1 fails to receive the OAM connectivity check packet through the E port in a specific time, it indicates that a fault occurs in the PBT forward ring; if a non-first node of the PBT ring fails to detect the OAM connectivity check packet from the E port in a specific time, the non-first node of the PBT ring knows that a fault occurs in the PBT forward ring.
   The third fault detecting method is the same as that in the first embodiment, and will not be described again here.
III. The process of the fault protecting stage is as follows.
   In this embodiment, when it is detected that a fault occurs in the forward ring, an encapsulated PBT packet is sent to the PBT node 3 (the target node) through the reverse ring, and the specific implementation is as shown in FIG. 17, which includes the following steps.
   Steps 1701-1703: The parameters of the PBT ring are configured; for example, the operation mode of the service port of each node of the PBT ring is adapted to be a 1:1 reverse ring operation mode, and the W ports are enabled. The configuration may be implemented by the L2C control, or when each node of the PBT ring perceives the fault of the PBT ring by checking the OAM packet, the operation mode of the service port is configured automatically to be the 1:1 reverse ring operation mode.
   Steps 1704-1707: The service port of each node of the PBT ring activates the selective-transmit-selective-receive W port according to the configured operation mode.
   Step 1708: The service port of the PBT node 1 sends a PBT packet with the D-MAC address of VMAC-E3 to the PBT node 2.
   Step 1709: When the packet on the forward ring reaches a predecessor node (the PBT node 2) of the fault point, the predecessor node (the PBT node 2) of the fault point changes the D-MAC from the VMAC address of the forward ring to the corresponding VMAC address of the reverse ring according to the mapping relation or mapping rule between the VMAC-E and VMAC-W, for example, changes VMAC-E3 to VMAC-W3.
   Steps 1710-1712: The packet with the D-MAC of VMAC-W3 is forwarded through the W port according to the VMAC forwarding table, and reaches the PBT node 3 through the reverse ring.
   Step 1713: The user packet that needs to be sent to the PBT node 2 is received.
   Step 1714: PBT encapsulation is performed on the user packet from the service port to generate a PBT packet, and the D-MAC of the packet is VMAC-W2.
   Steps 1715-1716: The PBT node 1 selectively sends the PBT packet with the D-MAC of VMAC-W2 through the W port according to the VMAC forwarding table, and the PBT packet arrives at the PBT node 3 of the fault point through the reverse ring.
   Step 1717: The PBT node 3 changes the D-MAC from the VMAC of the reverse ring to the corresponding VMAC of the forward ring according to the mapping relation or mapping rule between the VMAC-E and VMAC-W, for example, changes VMAC-W2 to VMAC-E2.
   Steps 1718-1720: The PBT node 3 selectively sends the PBT packet with the D-MAC of VMAC-E2 through the E port according to the VMAC forwarding table, and the PBT packet reaches the PBT node 2 through the forward ring.
   Step 1721: The PBT node 2 selectively receives the PBT packet with the D-MAC of VMAC-E2 from the E port, and performs decapsulation on the packet to obtain the user packet.
   It should be noted that, for the PBT packet received after the operation mode switching, the PBT node may perform path optimization, so that the PBT packet to the destination of a PBT node before the subsequent nodes of the fault point may be forwarded in the forward ring, and the PBT packet to the destination of a PBT node after the predecessor node of the fault point may be forwarded in the reverse ring.
IV. The process of the recovery detecting stage is as follows.
   The recovery detecting process is the same as that in the first embodiment.
V. The process of the recovery stage is as follows.
   The process of the recovery stage is as shown in FIG. 18, which includes the following steps.
   Steps 1801-1803: The parameters of the PBT ring are configured; for example, the operation mode of the service port of each node is adapted to be a 1:1 reverse ring operation mode, and the E ports are enabled. The configuration may be implemented by the L2C control, or when each node of the PBT ring perceives that the PBT ring recovers from the fault by checking the OAM packet, the operation mode of the service port is configured automatically to be the 1:1 forward ring operation mode.
   Steps 1804-1812 are the same as steps 1408-1416.
   Embodiment 5 is a ring-based packet transmitting method, in which a node equipment is interconnected with one or more node equipments through ports provided thereon respectively to form a single PBT ring. The method includes the following steps.

PBT encapsulation is performed on a received user packet;
An active transmission path is detected for fault, and when a fault occurs in the active transmission path, the PBT encapsulated packet is sent to a target node equipment through a standby transmission path.

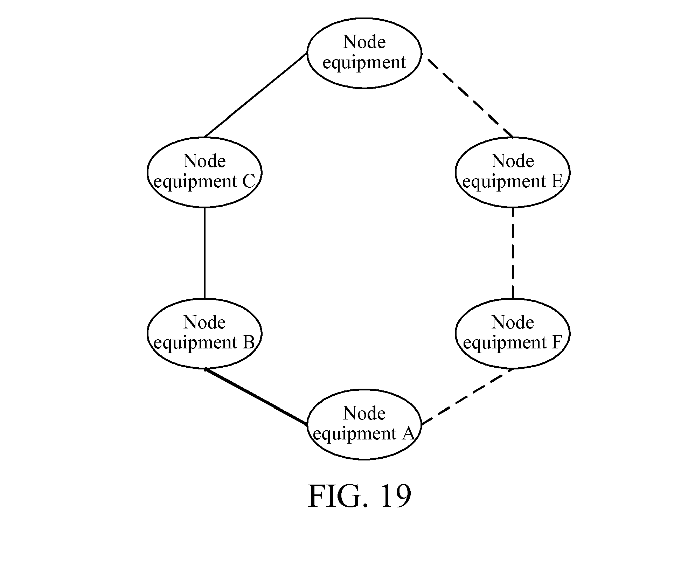

An example which a node equipment transmits a packet to any other node equipment is described in the following. As shown in FIG. 19, it is assumed that the packet need to be transmitted between the node equipment A and the node equipment D. Two transmission paths exist between the node equipment A and the node equipment D: one transmission path is the path from the node equipment A to the node equipment B to the node equipment C to the node equipment D, which is represented by a solid line and is referred to as the active transmission path; the other path is the path from the node equipment A to the node equipment F to the node equipment E to the node equipment D, which is represented by a dashed line and is referred to as a standby transmission path.

In a normal state, the data packet from the node equipment A to the node equipment D is transmitted along the active transmission path, and at this point, the standby transmission path is in an off state. If a fault occurs in the active transmission path, the standby transmission path is selected to transmit the packet, so that the protection of the PBT ring is achieved.

Furthermore, when it is detected that the active transmission path recovers from the fault, the active transmission path is reused to send the encapsulated packet.

Persons of ordinary skill in the art can understand that all or a part of the steps in the method according to the previous embodiments may be completed by relevant hardware instructed by a program, and the program may be stored in a computer readable storage medium. When executed, the program includes the following steps.

PBT encapsulation is performed on a received user packet.

The one or more PBB or PBT rings are detected for fault; when a fault is detected, a PBB or PBT ring without fault is selected to send the encapsulated packet to a target node equipment according to the corresponding relation between VMAC addresses and ports.

The ring includes at least two node equipments. The node equipments are interconnected with one or more node equipments respectively through the ports provided thereon to form at least two PBB or PBT rings.

Optionally, when executed, the program further includes the following steps.

PBT encapsulation is performed on a received user packet.

An active transmission path is detected for fault, and when a fault occurs in the active transmission path, the encapsulated packet is sent to the target node equipment through a standby transmission path.

The ring includes at least two node equipments. The node equipments are interconnected with one or more node equipments respectively through the ports provided thereon to form a PBB or PBT ring.

The storage medium may be a ROM, a RAM, a magnetic disk, or an optical disk.

It should be noted that, the embodiments of the present invention describe mainly the implementation of the PBT ring network formed by PBT nodes, and the implementation of the PBB ring network formed by PBB nodes is basically the same as the above implementation, and will not described here again.

It is known from the above that, in the embodiments of the present invention, since the node equipments are interconnected with two node equipments respectively through the ports provided thereon to form one or more PBB/PBT rings, when a fault occurs in one PBB/PBT ring, another PBB/PBT ring may be used to transmit the packet, or when a fault occurs in the active transmission path, the standby transmission path may be selected to transmit the packet. As such, communication interruption of the PBB/PBT ring network is prevented, so that the protection to the PBB/PBT ring is achieved.

The ring-based packet transmitting method, network system and node equipment according to the embodiments of the present invention are introduced in detail above. The specific examples provided in the specification are used to illustrate the principles and implementation of the present invention. The description about the embodiments of the present invention helps to understand the method and core ideas of the present invention. Persons of ordinary skill in the art can make variations and modifications to the present invention in terms of the specific implementations and application scopes according to the ideas of the present invention. Therefore, the specification shall not be construed as limitations to the present invention.

## Claims

1. A ring-based packet transmitting method, wherein the ring comprises at least two node equipments interconnected to form at least two provider backbone bridge, PBB, or provider backbone transport, PBT, rings, the method comprising:
encapsulating a received user packet;
detecting the one or more PBB or PBT rings for fault; and
selecting a PBB or PBT ring having no fault to send the encapsulated packet to a target node equipment according to a corresponding relation between virtual media access control, VMAC, addresses and ports when a fault is detected.

2. The method according to claim 1, wherein before the encapsulating the received user packet, the method further comprises:
configuring an operation mode of the node equipments on the PBB or PBT ring;
configuring the VMAC address; and
enabling corresponding ports according to the operation mode, and creating the corresponding relation between the VMAC addresses and the ports.

3. The method according to claim 2, wherein the detecting the one or more PBB or PBT rings for fault comprises:
sending a loopback request packet or a connectivity check packet to a first ring and/or a second ring according to the corresponding relation between the VMAC addresses and the ports; and
determining whether a loopback reply packet or the connectivity check packet sent by the first ring or the second ring is received, if yes, no fault occurring in the first ring or the second ring; otherwise, the fault occurring in the first ring or the second ring.

4. The method according to claim 2, wherein the detecting the one or more PBB or PBT rings for fault comprises:
reporting, by two node equipments, that the fault occurs in the ring when the fault occurs in connection between the two node equipments on the ring.

5. The method according to any one of claims 2 to 4, wherein when the configured operation mode determines that the encapsulated packet sent by the first ring and/or the second ring needs to be received selectively, the selecting the PBB or PBT ring having no fault to send the encapsulated packet to the target node equipment according to a fault detection result comprises:
selecting the first ring and/or the second ring having no fault to send the encapsulated packet according to the corresponding relation between the VMAC addresses and the ports when it is detected that the fault occurs in the first ring and/or the second ring.

6. The method according to claim 5, wherein after the selecting the ring having no fault to send the encapsulated packet to the target node equipment according to the fault detection result, the method further comprises:
selecting the first ring and/or the second ring having no fault to send the encapsulated packet according to the corresponding relation between the VMAC addresses and the ports when it is detected that the first ring and/or the second ring recovers from the fault.

7. A ring-based packet transmitting method, wherein the ring comprises at least two node equipments interconnected to form one provider backbone bridge, PBB, or provider backbone transport, PBT, ring, and the method comprises:
performing PBB/PBT encapsulation on a received user packet;
detecting an active transmission path for fault, and when a fault occurs in the active transmission path, sending the encapsulated packet to a target node equipment through a standby transmission path.

8. The method according to claim 7, wherein after the sending the encapsulated packet to the target node equipment through the standby transmission path, the method further comprises:
sending the encapsulated packet through the active transmission path when it is detected that the active transmission path recovers to normal from the fault.

9. A network system, comprising at least two node equipments interconnected with one or more node equipments respectively through ports provided thereon to form one or more provider backbone bridge, PBB, or provider backbone transport, PBT, rings, wherein
the node equipments are adapted to encapsulate a received user packet, detect the one or more PBB or PBT rings for fault, and select a PBB or PBT ring or a transmission path having no fault to send the encapsulated packet to a target node equipment according to a corresponding relation between virtual media access control, VMAC, addresses and the ports when a fault is detected.

10. The network system according to claim 9, wherein the node equipments are further adapted to determine whether a fault occurs in the PBB or PBT ring or a transmission path, or determine whether the PBB or PBT ring or the transmission path recovers to normal from the fault, and send a fault detection result to a data processing unit.

11. Anode equipment, comprising:
at least two ports, adapted to be interconnected with one or more node equipments respectively to form one or more provider backbone bridge, PBB, or provider backbone transport (PBT) rings; and
a data processing unit, adapted to encapsulate a received user packet, detect the one or more PBB or PBT rings for fault, and select a PBB or PBT ring or a transmission path having no fault to send the encapsulated packet to a target node equipment according to a corresponding relation between virtual media access control, VMAC, addresses and the ports when a fault is detected.

12. The node equipment according to claim 11, further comprising:
a configuring unit, adapted to configure an operation mode, configure VMAC addresses, enable corresponding ports according to the operation mode, and create a corresponding relation between the VMAC addresses and the ports; and
a storage unit, adapted to store the corresponding relation between the VMAC addresses and the ports created by the configuring unit.

13. The node equipment according to claim 12, wherein the data processing unit comprises a service port processing unit and a port processing unit,
the service processing unit is adapted to receive the user packet, and send the user packet to the port processing unit according to the configured operation mode; and
the port processing unit is adapted to encapsulate the user packet, and select a PBB or PBT ring or a transmission path having no fault to send the encapsulated packet to a target node equipment according to the configured operation mode and the corresponding relation between the VMAC addresses and the ports.

14. The node equipment according to claim 13, wherein the port processing unit comprises a first port processing unit and a second port processing unit,
the first port processing unit is adapted to perform PBB or PBT encapsulation on the user packet, send the PBB or PBT encapsulated packet to the target node equipment according to the corresponding relation between the VMAC addresses and the ports, receive the PBB or PBT encapsulated packet, and when a target media access address of the packet is a local address, perform PBB or PBT decapsulation on the PBB or PBT encapsulated packet and send the packet to the service port processing unit, and send the PBB or PBT encapsulated packet to the second port processing unit according to a fault detection result; and
the second port processing unit is adapted to perform the PBB or PBT encapsulation on the user packet, send the encapsulated packet to the target node equipment according to the corresponding relation between the VMAC addresses and the ports, receive the PBB or PBT encapsulated packet, and when the target media access address of the packet is a local address, perform the PBB or PBT decapsulation on the PBB or PBT encapsulated packet and send the packet to the service port processing unit, and send the PBB or PBT encapsulated packet to the first port processing unit according to the fault detection result.

15. The node equipment according to any one of claims 11 to 14, further comprising:
a fault detecting unit, adapted to determine whether the fault occurs in the PBB or PBT ring or the transmission path, or determine whether the PBB or PBT ring or the transmission path recovers to normal from the fault, and send the fault detection result to the data processing unit.
